# EUROPÄISCHE PATENTSCHRIFT

(11) **EP 2 630 025 B1**
(45) Veröffentlichungstag und Bekanntmachung des Hinweises auf die Patenterteilung: **14.01.2015**
(21) Anmeldenummer: 11761517.9
(22) Anmeldetag: 24.09.2011
(51) Int. Cl.: B62D 21/11, B62D 29/00

(54) **HILFSRAHMEN FÜR EIN KRAFTFAHRZEUG**
SUBFRAME FOR A MOTOR VEHICLE
CADRE AUXILIAIRE POUR UN VÉHICULE AUTOMOBILE

(30) Priorität: 23.10.2010 DE 102010049344
(43) Veröffentlichungstag der Anmeldung: 28.08.2013
(73) Patentinhaber: Audi AG, 85045 Ingolstadt (DE)
(72) Erfinder: LEIBL, Peter, 85077 Manching (DE)
(86) Internationale Anmeldenummer: PCT/EP2011/004787
(87) Internationale Veröffentlichungsnummer: WO 2012/052103

(56) Entgegenhaltungen:
- EP-A2- 1 106 478
- EP-A2- 1 577 195
- US-A1- 2006 103 099

## Beschreibung

Die Erfindung betrifft einen Hilfsrahmen für ein Kraftfahrzeug gemäß der im Oberbegriff des Anspruchs 1 angegebenen Art. Dokument EP 1 577 195 offenbart einen solchen Hilfsrahmen.

Derartige Hilfsrahmen, insbesondere in Form eines Hinterachsträgers sind komplexe Fahrwerksbauteile, die hohe Investitionen verursachen. Um die Investitionen so gering wie möglich zu halten, wird deshalb in der Regel pro Baureihe auf eine Ausführung eines Achsträgers zurück gegriffen. Diese Ausführung ist dann entsprechend so zu dimensionieren, dass eine ausreichende Betriebsfestigkeit für das schwerste Fahrzeug dieser Baureihe gewährleistet ist. Im Umkehrschluss bedeutet dies, dass der in dieser Baureihe verwendete Achsträger für leichtere Fahrzeuge z. B. weniger stark motorisierte Fahrzeuge zu schwer dimensioniert ist und damit ein unnötig hohes Bauteilgewicht darstellt.

Der Erfindung liegt die Aufgabe zu Grunde einen Hilfsrahmen für ein Kraftfahrzeug gemäß der im Oberbegriff des Anspruchs 1 angegebenen Art unter Vermeidung der genannten Nachteile derart weiterzubilden, dass eine Verwendung innerhalb einer Baureihe ohne unnötiges Bauteilgewicht für die Basisvariante / für leichte Fahrzeuge ermöglicht ist.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Art und Weise umfasst der Hilfsrahmen für ein Kraftfahrzeug einen Hohlraum bildenden Grundrahmen der über mehrere Befestigungspunkte mit einer Fahrzeugkarosserie verbunden ist. Zudem weist der Grundrahmen mindestens eine Krafteinleitungsstelle zur Aufnahme und/oder Abstützung weiterer Kraftfahrzeugkomponenten auf. Erfindungsgemäß ist im Umfeld der Krafteinleitungsstelle der Hohlraum lokal mit Hartschaum gefüllt.

Die erfindungsgemäße Ausbildung des Hilfsrahmen erlaubt nunmehr erstmals in vorteilhafter Weise eine Dimensionierung des Hilfsrahmes anhand des leichtesten Kraftfahrzeugs einer Kraftfahrzeugbaureihe. D.h. der erfindungsgemäße Hilfsrahmen baut im Vergleich zum Stand der Technik wesentlich leichter. Für schwere Fahrzeuge der Bauteilreihe ist der Hohlraum im Umfeld der Krafteinleitungsstelle mit Hartschaum gefüllt. Die Versteifung des Hohlraums mit Hartschaum bewirkt eine ausreichende Stabilisierung des Grundrahmens, so dass eine ausreichende Festigkeit auch für die schwereren Fahrzeuge der Baureihe gewährleistet. Ein weiterer Vorteil der Ausschäumung des Hohlraums mit Hartschaum ist, dass hierdurch auch die akustischen Eigenschaften des Hilfsrahmens verbessert werden.

Vorzugsweise handelt es sich bei dem Hartschaum um Polyurethanschaum. Die Verwendung von Polyurethanschaum erweist sich als vorteilhaft, weil dieser kostengünstig ist und zudem eine leichte Verarbeitung gewährleistet ist.

Von Vorteil ist insbesondere, dass die erfindungsgemäße Versteifung des Grundrahmens für unterschiedlich ausgebildete Krafteinleitungsstelle durchführbar ist:

So umfasst die Krafteinleitungsstelle gemäß der Erfindung ein hülsenförmiges Bauteil, welches im Hohlraum des Grundrahmens angeordnet und mit diesem fest, beispielsweise mittels einer Schweißverbindung, verbunden ist. Aufgrund der lokalen Ausschäumung des Hohlraums ist das im Grundrahmen befindliche hülsenförmigen Bauteil vollständig mit Hartschaum umschäumt.

Eine zweite, nicht beanspruchte Ausführungsform sieht vor, dass die Krafteinleitungsstelle ein laschenförmiges Bauteil umfasst, welches außen am Grundrahmen angeordnet und mit diesem fest verbunden ist. Die feste Verbindung zwischen laschenförmigen Bauteil und Außenseite des Grundrahmens kann wiederum beispielsweise mittels einer Schweißverbindung realisiert sein. Im Bereich des laschenförmigen Bauteils ist der Grundrahmen bzw. der Hohlraum des Grundrahmens lokal mit Hartschaum ausgeschäumt.

Ein weiterer Vorteil des erfindungsgemäßen Hilfsrahmen ist, dass dieser sowohl als ein Schalenrahmen als auch als "konventioneller Rahmen", d.h..ein zwei Längsträger und mindestens einen Querträger aufweisender Hilfsrahmen, ausgebildet sein kann. Die erfindungsgemäße Versteifung des Hilfsrahmens mit Hartschaum ist bei beiden Ausführungsformen auf eine einfache Art und Weise möglich.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine Draufsicht auf einen Hilfsrahmen;
- Fig. 2: eine Detailansicht des mit dem Kreis markierten Ausschnitts des Hilfsrahmens aus Fig. 1, wobei die Deckschale ausgeblendet ist und die Krafteinleitungsstelle ohne Ausschäumung versehen ist;
- Fig. 3: die Detailansicht aus Fig. 2, wobei die Krafteinleitungsstelle mit einer Ausschäumung versehen ist, und
- Fig. 4: eine schematische Darstellung einer weiteren Ausführungsform einer Krafteinleitungsstelle.

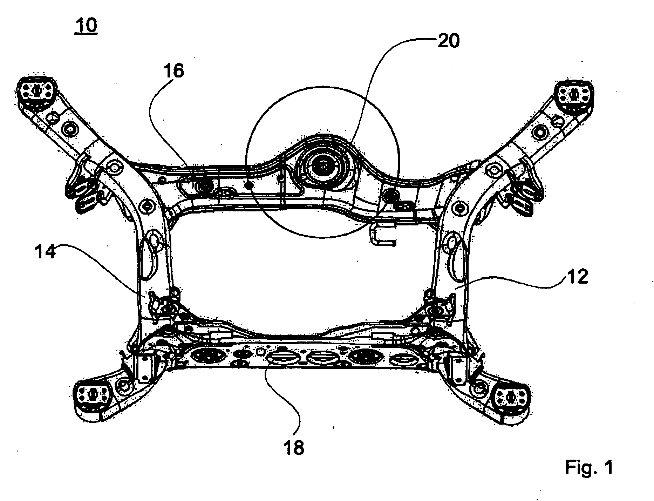

Fig. 1 zeigt mehr oder minder schematisch einen insgesamt mit der Bezugsziffer 10 bezeichneten Hilfsrahmen in Form eines Hinterachsträgers für ein Kraftfahrzeug einer Kraftfahrzeugbaureihe.

Der Hilfsrahmen 10 umfasst zwei in Fahrzeuglängsrichtung ausgerichtete Längsträger 12, 14 sowie zwei in Fahrzeugquerrichtung ausgerichtete Querträger 16, 18. Zudem weist der Hilfsrahmen 10 mehrere Krafteinleitungsstellen 20 zur Aufnahme und/oder Abstützung weiterer Kraftfahrzeugkomponenten auf. Im weiteren Verlauf der Beschreibung wird zunächst die am Querträger 16 angeordnete Krafteinleitungsstelle 20 näher betrachtet.

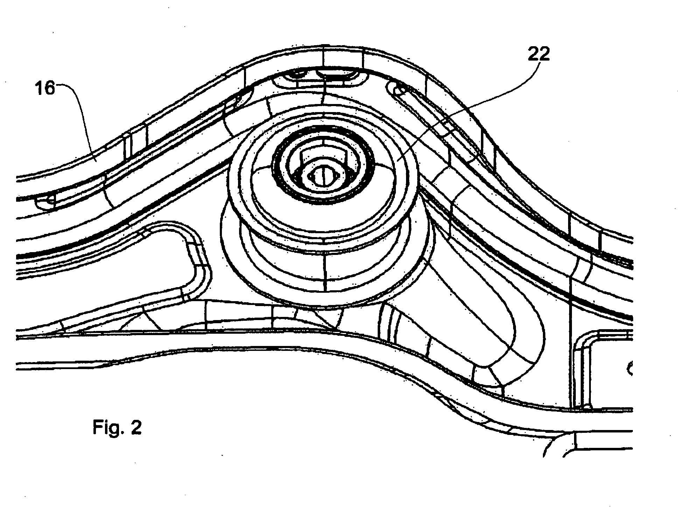

Wie Fig. 2 zu entnehmen ist, ist der die Konsole 20 aufweisende erste Querträger 16 als ein Hohlkörper ausgebildet. Die Deckschale des Querträgers 16 ist vorliegend nicht dargestellt. Die Krafteinleitungsstelle 20 umfasst ein hülsenförmiges Bauteil 22, welches mit dem Querträger 16 beispielsweise mittels einer Schweißverbindung fest verbunden ist. Da erfindungsgemäß die Dimensionierung des Hilfsrahmens 10 sich an der unteren Grenze der technisch zulässigen Hinterachslast orientiert, baut der Hilfsrahmen 10 sehr leicht und stellt für die in Frage kommende Kraftfahrzeugbaureihe eine sehr leichte Grundvariante dar.

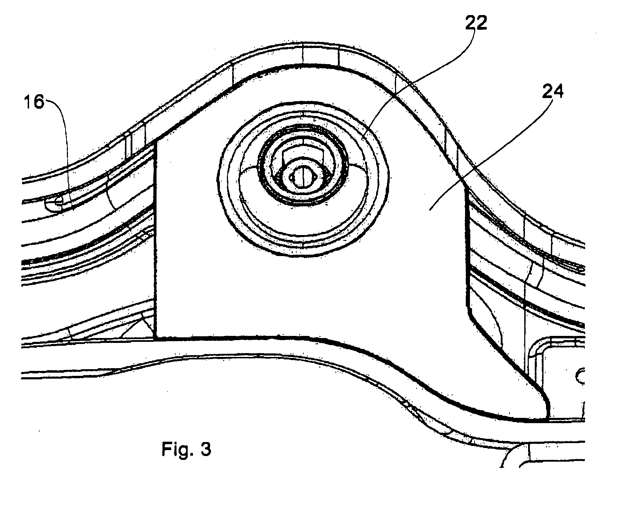

Um ein Einsatz des Hilfsrahmens 10 auch für schwerer Fahrzeuge zu ermöglichen, ist - wie in Fig. 3 dargestellt- der Hohlraum um die Krafteinleitungsstelle 20, d.h. vorliegend das hülsenförmige Bauteil 22, mit Hartschaum 24 umschäumt. Der Hartschaum 24 im Hohlraum dient der Stabilisierung der Grundstruktur, verhindert Relativbewegungen im Hohlraum und trägt somit zur Lebensdauersteigerung bei geringen Bauteilwandstärken bei. Neben der Lebensdauersteigerung werden durch die Versteifung mittels des Hartschaums 24 auch die akustischen Eigenschaften verbessert.

Vorliegend handelt es sich bei dem Hartschaum 24 um Polyurethanschaum.

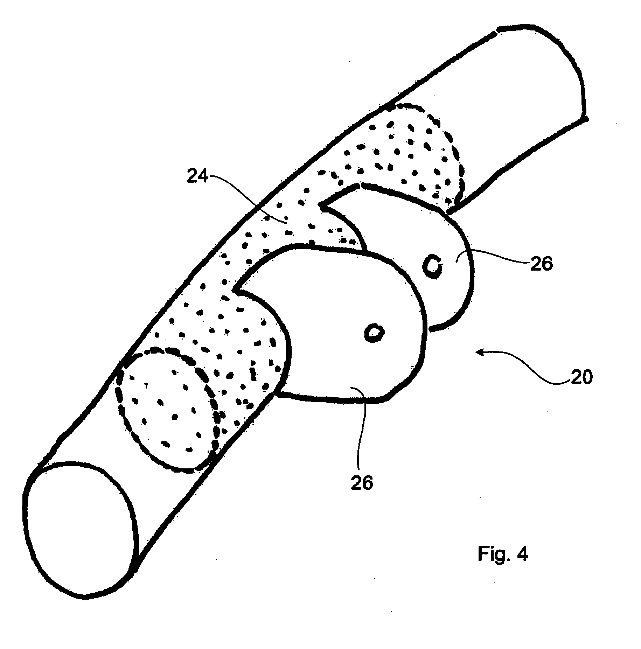

Fig. 4 zeigt schematisch einen Ausschnitts eines Hilfsrahmens 10 mit einer Krafteinleitungsstelle 20. Gemäß dieser Ausführungsform umfasst die Krafteinleitungsstelle 20 ein laschenförmiges Bauteil 26. Das laschenförmige Bauteil 26 ist mit der Außenkontur des Hilfsrahmen fest, z.B. mittels einer Schweißverbindung, verbunden. Um eine Stabilisierung der Hilfsrahmens 10 zu gewährleistet, ist das Innere des Hilfsrahmens 10 im Bereich des laschenförmigen Bauteils 26 lokal mit Hartschaum 24 ausgeschäumt.

### Bezugszeichenliste

- 10: Hilfsrahmen
- 12: Längsträger
- 14: Längsträger
- 16: erster Querträger
- 18: zweiter Querträger
- 20: Krafteinleitungsstelle
- 22: Hülsenförmiges Bauteil
- 24: Hartschaum
- 26: Laschenförmiges Bauteil

## Patentansprüche

1. Hilfsrahmen (10) für ein Kraftfahrzeug, mit einem einen Hohlraum bildenden Grundrahmen, der über mehrere Befestigungspunkte mit einer Fahrzeugkarosserie verbunden ist, wobei der Grundrahmen mindestens eine Krafteinleitungsstelle (20) zur Aufnahme und/oder Abstützung weiterer Kraftfahrzeugkomponenten aufweist, wobei im Umfeld der Krafteinleitungsstelle (20) der Hohlraum lokal mit Hartschaum (24) gefüllt ist, **dadurch gekennzeichnet, dass** die Krafteinleitungsstelle (20) ein hülsenförmiges Bauteil (22) umfasst, welches im Hohlraum des Grundrahmens angeordnet und mit diesem fest verbunden ist, und dass das im Grundrahmen befindliche hülsenförmige Bauteil (22) vollständig mit Hartschaum umschäumt ist.

2. Hilfsrahmen (10) nach Anspruch 1, **dadurch gekennzeichnet, dass** es sich bei dem Hartschaum (24) um Polyurethanschaum handelt.

3. Hilfsrahmen (10) nach einem der vorgenannten Ansprüche, **dadurch gekennzeichnet, dass** der Grundrahmen als ein Schalenrahmen ausgebildet ist.

4. Hilfsrahmen (10) nach einem der Ansprüche 1 bis 3, **dadurch gekennzeichnet, dass** der Grundrahmen zwei Längsträger (12,14) und mindestens einen Querträger (16, 18) umfasst.

## Claims

1. Subframe (10) for a motor vehicle, having a base frame forming a hollow space, which base frame is connected to a vehicle bodywork by means of a plurality of fixing points, the base frame comprising at least one force-introduction point (20) for receiving and/or supporting further motor vehicle components, the hollow space being filled locally with rigid foam (24) in the vicinity of the force-introduction point (20), **characterised in that** the force introduction point (20) comprises a sleeve-like component (22) which is arranged in the hollow space in the base frame and is connected rigidly thereto, and **in that** the sleeve-like component (22) in the base frame is completely covered with rigid foam.

2. Subframe (10) according to claim 1, **characterised in that** the rigid foam (24) is a polyurethane foam.

3. Subframe (10) according to either of the preceding claims, **characterised in that** the base frame is formed as a shell frame.

4. Subframe (10) according to any of claims 1 to 3, **characterised in that** the base frame comprises two longitudinal beams (12, 14) and at least one traverse (16, 18).

## Revendications

1. Cadre auxiliaire (10) pour un véhicule automobile, comprenant un cadre de base formant un espace creux, qui est fixé en plusieurs points de fixation à une carrosserie du véhicule, dans lequel le cadre de base présente au moins un point d'introduction de force (20) pour recevoir et/ou soutenir d'autres composants du véhicule automobile, dans lequel, dans l'espace ambiant du point d'introduction de force (20), l'espace creux est localement rempli de mousse rigide (24), **caractérisé en ce que** le point d'introduction de force (20) comprend une pièce en forme de douille (22) qui est agencée dans l'espace creux du cadre de base et est solidement fixée à celui-ci et **en ce que** la pièce en forme de douille (22) se trouvant dans le cadre de base est complètement envahie de mousse rigide.

2. Cadre auxiliaire (10) selon la revendication 1, **caractérisé en ce que** la mousse rigide (24) est formée de mousse de polyuréthane.

3. Cadre auxiliaire (10) selon l'une quelconque des revendications précédentes, **caractérisé en ce que** le cadre de base se présente sous la forme d'un cadre monocoque.

4. Cadre auxiliaire (10) selon l'une quelconque des revendications 1 à 3, **caractérisé en ce que** le cadre de base comprend deux longerons (12, 14) et au moins une traverse (16, 18).
